# EUROPÄISCHE PATENTSCHRIFT

(11) **EP 3 749 540 B1**
(45) Veröffentlichungstag und Bekanntmachung des Hinweises auf die Patenterteilung: **26.04.2023**
(21) Anmeldenummer: 19703011.7
(22) Anmeldetag: 15.01.2019
(51) Int. Cl.: B60K 35/00, B60K 37/06, G06F 3/041, G06F 3/0488

(54) **BEDIENVORRICHTUNG SOWIE VERFAHREN UND COMPUTERLESBARES SPEICHERMEDIUM MIT INSTRUKTIONEN ZUM EINRICHTEN EINER BEDIENVORRICHTUNG**
OPERATING DEVICE, METHOD, AND COMPUTER-READABLE STORAGE MEDIUM WITH INSTRUCTIONS FOR SETTING UP AN OPERATING DEVICE
DISPOSITIF DE COMMANDE AINSI QUE PROCÉDÉ ET SUPPORT DE STOCKAGE LISIBLE PAR ORDINATEUR COMPORTANT DES INSTRUCTIONS POUR LA CONFIGURATION D'UN DISPOSITIF DE COMMANDE

(30) Priorität: 09.02.2018 DE 102018202049
(43) Veröffentlichungstag der Anmeldung: 16.12.2020
(73) Patentinhaber: VOLKSWAGEN AKTIENGESELLSCHAFT, 38440 Wolfsburg (DE)
(72) Erfinder: LUTZ, Stefan, 38446 Wolfsburg (DE)
(86) Internationale Anmeldenummer: PCT/EP2019/050984
(87) Internationale Veröffentlichungsnummer: WO 2019/154599

(56) Entgegenhaltungen:
- DE-A1-102012 011 177
- DE-A1-102012 023 005
- US-A1- 2014 306 905
- US-A1- 2015 153 893

## Beschreibung

Die vorliegende Erfindung betrifft eine Bedienvorrichtung sowie ein Verfahren und ein computerlesbares Speichermedium mit Instruktionen zum Einrichten einer Bedienvorrichtung. Die Erfindung betrifft weiterhin ein Kraftfahrzeug, in dem eine erfindungsgemäße Bedienvorrichtung oder ein erfindungsgemäßes Verfahren eingesetzt wird.

In heutigen Kraftfahrzeugen werden in zunehmendem Maße Bedienvorrichtungen mit berührungsempfindlichen Eingabeflächen eingesetzt, mit denen die Nutzer auf die vielfältigen Funktionen und Einstellungen des Kraftfahrzeugs zugreifen können.

Typischerweise verwenden solche Bedienvorrichtungen einen Touchscreen und sind Bestandteil eines Infotainment-Systems oder dienen der Steuerung von Fahrzeugfunktionen. Für die Interaktion mit dem Nutzer können neben der berührungsempfindlichen Eingabefläche zusätzliche mechanische Eingabegeräte vorgesehen sein, beispielsweise in Form von Bedientasten, einer Tastatur oder eines Dreh-Drück-Stellers. In Anbetracht sinkender Preise und der Gewöhnung der Nutzer an große Bildschirme werden auch in Kraftfahrzeugen zunehmend größere Touchscreens verbaut.

Zwar ist die Bedienung von Funktionen über einen berührungsempfindlichen Bildschirm grundsätzlich sehr komfortabel, im Fahrbetrieb erfordert sie aber eine ruhige Hand bzw. einen ruhigen Arm, um Fehlbedienungen zu verhindern. Die Ergonomie einiger Fahrzeugtypen unterstützt die Bedienung zum Teil mit Ablagemöglichkeiten, z.B. kann in Personenkraftwagen manchmal der Arm zur Stabilisierung der Hand auf einem vorhandenen Schaltknauf abgestützt werden. Dies ist allerdings wenig komfortabel und auch nicht ohne Risiko. Bei Fahrzeugen ohne diese ergonomischen Hilfen, z.B. bei einer Lenkradschaltung, besteht diese Möglichkeit oftmals nicht.

In diesem Zusammenhang beschreibt die DE 10 2014 200 609 A1 eine Bedienvorrichtung für ein Fahrzeug. Die Bedienvorrichtung weist eine berührungssensitive Oberfläche auf, in die eine Mulde eingebracht ist. Die Mulde kann vom Nutzer ertastet werden, ohne eine Bedieneingabe auszulösen. Für eine erfolgreiche Bedieneingabe muss zunächst eine erste Berührung innerhalb der Mulde und eine zweite Berührung außerhalb der Mulde von einer Steuerungseinheit detektiert werden. Zwar lassen sich mit diesem Ansatz Fehlbedienungen zuverlässig verhindern, allerdings wird durch die notwendigen Mulden die freie Gestaltbarkeit der Bildschirminhalte erheblich eingeschränkt.

Die DE 10 2013 021 230 A1 beschreibt ein sensorisches Bedienfeld für ein Fahrzeug zum Erfassen eines Eingabesignals. Das sensorische Bedienfeld weist ein Tastenfeld mit von einem Nutzer betätigbaren Berührungstasten mit einer berührungsempfindlichen Oberfläche auf. Das Tastenfeld weist eine erste Priorisierung auf, wobei die erste Priorisierung zwischen mehreren aktivierten Berührungstasten eine Berührungstaste priorisiert und als aktiviert erkennt. Die erste Priorisierung berücksichtigt eine Bedienrichtung des Nutzers. Durch die Priorisierung der Tasten wird versucht, unbeabsichtigt berührte Tasten zu unterdrücken. Allerdings ist es nicht immer einfach, zwischen absichtlich und unabsichtlich berührten Tasten zu unterscheiden, so dass es leicht zu Fehlentscheidungen kommen kann.

Die DE 10 2012 011 177 A1 beschreibt ein Verfahren zur Bedienung von Funktionen eines Fahrzeuges mittels eines Bedienelements, das eine berührungsempfindliche Bedienfläche aufweist. Über die Bedienfläche ist eine Mehrzahl von Funktionen bedienbar, wobei den jeweiligen Funktionen jeweils Teilbereiche der Bedienfläche zugewiesen werden. Zur Festlegung der Teilbereiche wird die Position einer Hand des Bedieners ermittelt. Die jeweilige Lage der jeweiligen Teilbereiche wird dann relativ zu der Position der Hand des Bedieners zugewiesen. Die Position der Hand kann unmittelbar unter Verwendung der Bedienfläche ermittelt werden. Dabei wird beispielsweise die Position des Handballens der Hand ermittelt. Bei diesem Ansatz kann der Nutzer seine Hand relativ frei auf der Bedienfläche platzieren, die anzuzeigenden Schaltflächen werden dann angepasst an die Position der Hand auf der Bedienfläche angezeigt. Dies bedeutet allerdings, dass die Teilbereiche für die Bedienung erst nach Auflegen des Handballens festgelegt werden können, so dass entweder erst danach eine Anzeige von Schaltflächen erfolgen kann oder zumindest ein Umordnen der Schaltflächen erfolgen muss.

Die US 2014/0306905 A1 beschreibt ein Verfahren zum Anpassen eines Anzeigebereichs eines berührungsempfindlichen Displays. Bei dem Verfahren wird zunächst eine Geste zum Einstellen eines inaktiven Bereichs in einem aktiven Bereich einer Anzeige erfasst. Anschließend werden eine Größe und ein Ort eines inaktiven Bereichs ermittelt. Basierend auf der ermittelten Größe und dem ermittelten Ort wird schließlich ein Teil des aktiven Bereichs als inaktiver Bereich festgelegt.

Es ist eine Aufgabe der Erfindung, Lösungen für eine Bedienvorrichtung sowie zum Einrichten einer Bedienvorrichtung bereitzustellen, die die Bedienung der Bedienvorrichtung durch den Nutzer während des Fahrbetriebs erleichtern.

Diese Aufgabe wird durch ein Verfahren mit den Merkmalen des Anspruchs 1, durch ein computerlesbares Speichermedium mit Instruktionen gemäß Anspruch 8 und durch eine Bedienvorrichtung mit den Merkmalen des Anspruchs 9 gelöst. Bevorzugte Ausgestaltungen der Erfindung sind Gegenstand der abhängigen Ansprüche.

Gemäß einem ersten Aspekt der Erfindung umfasst ein Verfahren zum Einrichten einer in einem Kraftfahrzeug verbauten Bedienvorrichtung die Schritte:
- Aktivieren eines Einrichtungsmodus der Bedienvorrichtung;
- Ermitteln von Angaben zu einer Stützfläche der berührungsempfindlichen Eingabefläche, in der ein Nutzer seine Finger abstützen kann, basierend auf einer der folgenden Eingaben:
   Markieren einer Kontur der Stützfläche auf der berührungsempfindlichen Eingabefläche, Markieren zumindest eines Mittelpunktes der Stützfläche auf der berührungsempfindlichen Eingabefläche, Auswählen zumindest eines vorgeschlagenen Flächenelements auf der berührungsempfindlichen Eingabefläche;
- Festlegen der Stützfläche der berührungsempfindlichen Eingabefläche auf Grundlage der ermittelten Angaben; und
- Beenden des Einrichtungsmodus der Bedienvorrichtung.

Gemäß einem weiteren Aspekt der Erfindung enthält ein computerlesbares Speichermedium Instruktionen, die bei Ausführung durch einen Computer den Computer zur Ausführung der folgenden Schritte zum Einrichten einer in einem Kraftfahrzeug verbauten Bedienvorrichtung veranlassen:
- Aktivieren eines Einrichtungsmodus der Bedienvorrichtung;
- Ermitteln von Angaben zu einer Stützfläche der berührungsempfindlichen Eingabefläche, in der ein Nutzer seine Finger abstützen kann, basierend auf einer der folgenden Eingaben:
   Markieren einer Kontur der Stützfläche auf der berührungsempfindlichen Eingabefläche, Markieren zumindest eines Mittelpunktes der Stützfläche auf der berührungsempfindlichen Eingabefläche, Auswählen zumindest eines vorgeschlagenen Flächenelements auf der berührungsempfindlichen Eingabefläche;
- Festlegen der Stützfläche der berührungsempfindlichen Eingabefläche auf Grundlage der ermittelten Angaben; und
- Beenden des Einrichtungsmodus der Bedienvorrichtung.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine Bedienvorrichtung für ein Kraftfahrzeug auf:
- eine berührungsempfindliche Eingabefläche; und
- eine Steuerungseinheit zum Steuern der Bedienvorrichtung;
wobei die Steuerungseinheit eingerichtet ist, die folgenden Schritte zum Einrichten der Bedienvorrichtung auszuführen:
- Aktivieren eines Einrichtungsmodus der Bedienvorrichtung;
- Ermitteln von Angaben zu einer Stützfläche der berührungsempfindlichen Eingabefläche, in der ein Nutzer seine Finger abstützen kann, basierend auf einer der folgenden Eingaben:
   Markieren einer Kontur der Stützfläche auf der berührungsempfindlichen Eingabefläche, Markieren zumindest eines Mittelpunktes der Stützfläche auf der berührungsempfindlichen Eingabefläche, Auswählen zumindest eines vorgeschlagenen Flächenelements auf der berührungsempfindlichen Eingabefläche;
- Festlegen der Stützfläche der berührungsempfindlichen Eingabefläche auf Grundlage der ermittelten Angaben; und
- Beenden des Einrichtungsmodus der Bedienvorrichtung.

Erfindungsgemäß wird innerhalb der berührungsempfindlichen Eingabefläche mindestens eine Stützfläche festgelegt, innerhalb derer der Nutzer seine Finger abstützen kann, ohne dadurch versehentlich Aktionen auszulösen. Die Lage der Stützfläche innerhalb der berührungsempfindlichen Eingabefläche kann vom Nutzer entsprechend seiner Vorlieben angepasst werden. Indem der Nutzer seine Finger bei der Bedienung der Bedienvorrichtung abstützen kann, verringert sich die Wahrscheinlichkeit von Fehlbedienungen. Gleichzeitig ist keine komplexe Auswertung der Lage der Hand des Nutzers oder eine Priorisierung bestimmter Schaltflächen erforderlich. Insbesondere ist auch keine Änderung der Hardware der Bedienvorrichtung notwendig. Die erfindungsgemäße Lösung lässt sich zwanglos durch eine Anpassung der Software der Bedienvorrichtung umsetzen, so dass nur geringe Kosten anfallen. Vorzugsweise sind die Stützflächen in ihrer Lage und Größe festlegbar. Die aufgeführten Nutzereingaben lassen sich vom Nutzer schnell und unkompliziert eingeben, beispielsweise mit dem Finger oder mit einer Eingabehilfe direkt auf der berührungsempfindlichen Eingabefläche. Die Einrichtung der Stützfläche lässt sich so in wenigen Schritten abschließen. Als weitere Möglichkeit kann ein Verschieben oder Skalieren einer existierenden oder vorgeschlagenen Stützfläche erfolgen, beispielsweise durch Tippen, Halten und Wischen mit den Fingern auf der berührungsempfindlichen Eingabefläche.

Gemäß einem Aspekt der Erfindung weist die Bedienvorrichtung einen Touchscreen als berührungsempfindliche Eingabefläche auf. Ein Touchscreen hat den Vorteil, dass der Nutzer durch entsprechende Anzeigen auf dem Touchscreen interaktiv durch die Einrichtung der Stützfläche geführt werden kann. Zudem kann er auf der Anzeigefläche des Touchscreens gut erkennen, welche Bereiche sich bei einer gegebenen Anordnung von grafischen Elementen besonders für eine Stützfläche eignen. Nicht zuletzt verwenden Bedienvorrichtungen insbesondere im Automobilbereich regelmäßig Touchscreens für die Interaktion mit dem Nutzer, so dass die erfindungsgemäße Lösung umfangreich einsetzbar ist.

Gemäß einem Aspekt der Erfindung wird nach dem Festlegen der Stützfläche der berührungsempfindlichen Eingabefläche eine Anordnung von Elementen auf der berührungsempfindlichen Eingabefläche bestimmt. Im einfachsten Fall werden die Elemente so angeordnet, dass sich innerhalb der Stützfläche keine Elemente befinden. So kann leicht sichergestellt werden, dass die Stützfläche nicht mit bedienbaren Elementen im Konflikt gerät.

Gemäß einem Aspekt der Erfindung ist ein innerhalb der Stützfläche der berührungsempfindlichen Eingabefläche angeordnetes Element nicht anwählbar oder nur mittels einer unmissverständlichen Aktion anwählbar. Auf diese Weise bleibt der innerhalb der Stützfläche liegende Bereich der berührungsempfindlichen Eingabefläche für die grafische Gestaltung nutzbar. Beispielsweise können innerhalb der Stützfläche ausschließlich dekorative oder informative Elemente angezeigt werden, die nicht mit Funktionen verknüpft und deshalb auch nicht vom Nutzer anwählbar sind. Eine weitere Möglichkeit besteht darin, dass innerhalb der Stützfläche angeordnete Elemente zwar vom Nutzer anwählbar sind, dafür aber eine unmissverständliche Aktion erforderlich ist. Beispielsweise können Elemente außerhalb der Stützfläche durch einen einfachen Fingerdruck ausgewählt und aktiviert werden, während für Elemente innerhalb der Stützfläche ein mehrfacher Fingerdruck oder ein Einkreisen des gewünschten Elements erforderlich ist.

Gemäß einem Aspekt der Erfindung wird die Stützfläche der berührungsempfindlichen Eingabefläche hervorgehoben dargestellt. Somit ist für den Nutzer sofort ersichtlich, in welchem Bereich der berührungsempfindlichen Eingabefläche er seine Finger abstützen kann. Auf diese Weise wird die Bedienung der Bedienvorrichtung für den Nutzer deutlich vereinfacht.

Gemäß einem Aspekt der Erfindung werden unterschiedliche Stützflächen für unterschiedliche Bedienebenen der Bedienvorrichtung festgelegt. Bei einer Bedienvorrichtung mit verschiedenen Bedienebenen, wie sie üblicherweise anzutreffen ist, kann es sinnvoll sein, die Stützflächen individuell für einzelne Bedienebenen oder Gruppen von Bedienebenen anzupassen. Dies ist insbesondere dann der Fall, wenn der Nutzer die ursprüngliche Gestaltung der Bedienebenen im Wesentlichen beibehalten will. Er kann dann jeweils innerhalb der verschiedenen Bedienebenen nach geeigneten Positionen für die Stützfläche suchen. Zudem kann der Nutzer das Einrichten von Stützflächen auf solche Bedienebenen beschränken, die er typischerweise während des Fahrens bedient.

Besonders vorteilhaft werden ein erfindungsgemäßes Verfahren oder eine erfindungsgemäße Bedienvorrichtung in einem Fahrzeug, insbesondere einem Kraftfahrzeug, eingesetzt. Bei dem Kraftfahrzeug kann es sich beispielsweise um einen Personenkraftwagen oder Nutzfahrzeug handeln, z.B. einen Lastkraftwagen. Daneben können die beschriebenen Lösungen aber auch in anderen Bereichen Anwendung finden, beispielsweise für Tablets oder Touchscreens von interaktiven Präsentationssystemen, z.B. interaktive Tische oder interaktive Videowände.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Einrichten einer Bedienvorrichtung;
- Fig. 2: zeigt eine erste Ausführungsform einer Bedienvorrichtung;
- Fig. 3: zeigt eine zweite Ausführungsform einer Bedienvorrichtung;
- Fig. 4: stellt schematisch ein Kraftfahrzeug dar, in dem eine erfindungsgemäße Lösung realisiert ist;
- Fig. 5: zeigt schematisch einen Fahrzeuginnenraum mit einer Bedienvorrichtung mit einem Touchscreen;
- Fig. 6: zeigt eine Bedienvorrichtung mit einem Touchscreen, auf dem um eine Stützfläche herum Elemente angezeigt werden;
- Fig. 7: zeigt das Bestimmen einer Stützfläche durch Markieren einer Kontur der Stützfläche;
- Fig. 8: zeigt das Bestimmen einer Stützfläche durch Markieren eines Mittelpunktes der Stützfläche;
- Fig. 9: zeigt das Bestimmen einer Stützfläche durch Auswählen von vorgeschlagenen Flächenelementen;
- Fig. 10: zeigt eine Anordnung von Elementen auf dem Touchscreen, wenn keine Stützfläche festgelegt wurde;
- Fig. 11: zeigt eine erste Möglichkeit einer geänderten Anordnung der Elemente nach dem Festlegen einer Stützfläche;
- Fig. 12: zeigt eine zweite Möglichkeit einer geänderten Anordnung der Elemente nach dem Festlegen einer Stützfläche;
- Fig. 13: zeigt eine dritte Möglichkeit einer geänderten Anordnung der Elemente nach dem Festlegen einer Stützfläche; und
- Fig. 14: zeigt das Bestimmen einer Stützfläche durch Verschieben oder Skalieren einer existierenden oder vorgeschlagenen Stützfläche.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

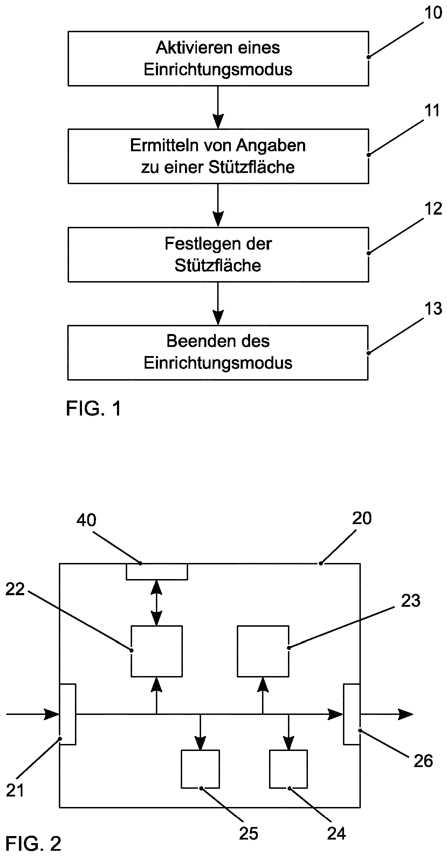

Fig. 1 zeigt schematisch ein Verfahren zum Einrichten einer Bedienvorrichtung mit einer berührungsempfindlichen Eingabefläche, beispielsweise einer Bedienvorrichtung in einem Kraftfahrzeug. Bei der berührungsempfindlichen Eingabefläche kann es sich z.B. um einen Touchscreen handeln. In einem ersten Schritt wird ein Einrichtungsmodus der Bedienvorrichtung aktiviert 10. Anschließend werden Angaben zu einer Stützfläche der berührungsempfindlichen Eingabefläche, in der ein Nutzer seine Finger abstützen kann, ermittelt 11. Dabei können individuelle Stützflächen für unterschiedliche Bedienebenen eingerichtet werden. Beispiele für Angaben zur Stützfläche sind eine Kontur der Stützfläche, ein Mittelpunkt der Stützfläche oder die Auswahl zumindest eines vorgeschlagenen Flächenelements durch den Nutzer. Auf Grundlage der ermittelten Angaben wird die Stützfläche der berührungsempfindlichen Eingabefläche festgelegt 12. Zudem kann zusätzlich die Anordnung von Elementen auf der berührungsempfindlichen Eingabefläche an die Stützfläche angepasst werden, z.B. indem innerhalb der Stützfläche angeordnete Elemente nicht anwählbar sind oder nur mittels einer unmissverständlichen Aktion anwählbar sind. Schließlich wird der Einrichtungsmodus der Bedienvorrichtung beendet 13. Vorzugsweise wird die Stützfläche auf der berührungsempfindlichen Eingabefläche für den Nutzer hervorgehoben.

Fig. 2 zeigt eine vereinfachte schematische Darstellung einer ersten Ausführungsform einer Bedienvorrichtung 20. Die Bedienvorrichtung 20 hat einen Eingang 21, über den Daten empfangen werden können. Die Bedienvorrichtung 20 hat zudem eine Steuerungseinheit 22 zum Steuern der Bedienvorrichtung 20 und eine Ausführungseinheit 23 zum Ausführen von Funktionen in Reaktion auf Nutzereingaben an einer berührungsempfindlichen Eingabefläche 40. Bei der berührungsempfindlichen Eingabefläche 40 kann es sich beispielsweise um einen Touchscreen handeln. In Fig. 2 ist die berührungsempfindliche Eingabefläche 40 Bestandteil der Bedienvorrichtung 20. Sie kann aber auch außerhalb der Bedienvorrichtung 20 angeordnet und mit dieser über eine Datenanbindung verbunden sein. Die Steuerungseinheit 22 ist eingerichtet, das in Zusammenhang mit Fig. 1 beschriebene Verfahren zum Einrichten der Bedienvorrichtung 20 auszuführen. Die Steuerungseinheit 22 und die Ausführungseinheit 23 können von einer Kontrolleinheit 24 gesteuert werden. Über die berührungsempfindliche Eingabefläche 40 können gegebenenfalls Einstellungen der Steuerungseinheit 22, der Ausführungseinheit 23, oder der Kontrolleinheit 24 geändert werden. Die in der Bedienvorrichtung 20 anfallenden Daten, beispielsweise die von der Ausführungseinheit 24 generierten Daten, können über einen Ausgang 26 ausgegeben oder in einem Speicher 25 der Bedienvorrichtung 20 abgelegt werden, beispielsweise für eine spätere Auswertung oder für eine Nutzung durch die Komponenten der Bedienvorrichtung 20. Die Steuerungseinheit 22, die Ausführungseinheit 23 sowie die Kontrolleinheit 24 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 21 und der Ausgang 26 können als getrennte Schnittstellen oder als eine kombinierte bidirektionale Schnittstelle implementiert sein. Die Bedienvorrichtung 20 kann beispielsweise in einem Kraftfahrzeug verbaut sein.

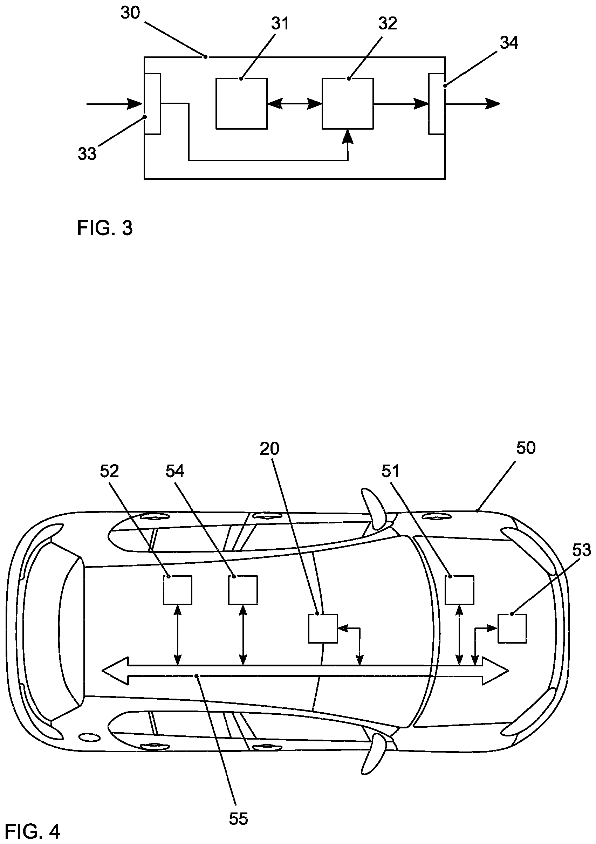

Fig. 3 zeigt eine vereinfachte schematische Darstellung einer zweiten Ausführungsform einer Bedienvorrichtung 30. In dieser Ausführungsform ist die berührungsempfindliche Eingabefläche nicht Bestandteil der Bedienvorrichtung 30, sondern mit dieser über eine Datenanbindung verbunden. Die Bedienvorrichtung 30 weist einen Prozessor 32 und einen Speicher 31 auf. Beispielsweise handelt es sich bei der Bedienvorrichtung 30 um einen Computer oder ein Steuergerät. Im Speicher 31 sind Instruktionen abgelegt, die die Bedienvorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Bedienvorrichtung 30 hat einen Eingang 33 zum Empfangen von Informationen, beispielsweise von Daten, die mittels der berührungsempfindlichen Eingabefläche erfasst wurden. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Kraftfahrzeug 50 dar, in dem eine erfindungsgemäße Lösung realisiert ist. Das Kraftfahrzeug 50 weist unter anderem ein Infotainment-System 51 auf, mit dem beispielsweise Multimedia-Inhalte wiedergegeben werden können. Weiterhin weist das Kraftfahrzeug 50 eine Datenübertragungseinheit 52 und eine Reihe von Fahrerassistenzsystemen 53 auf, von denen eines exemplarisch dargestellt ist. Mittels der Datenübertragungseinheit 52 kann eine Verbindung zu Dienstanbietern aufgebaut werden, beispielsweise für den Erwerb oder die Wiedergabe von Multimedia-Inhalten. Zur Speicherung von Multimedia-Inhalten oder anderen Daten ist ein Speicher 54 vorhanden. Über eine Bedienvorrichtung 20 kann auf das Infotainment-System 51 zugegriffen werden. Ebenso kann vorgesehen sein, dass über die Bedienvorrichtung 20 Einstellungen der Fahrerassistenzsysteme 53 angepasst werden können. Der Datenaustausch zwischen den verschiedenen Komponenten des Kraftfahrzeugs 50 erfolgt über ein Netzwerk 55.

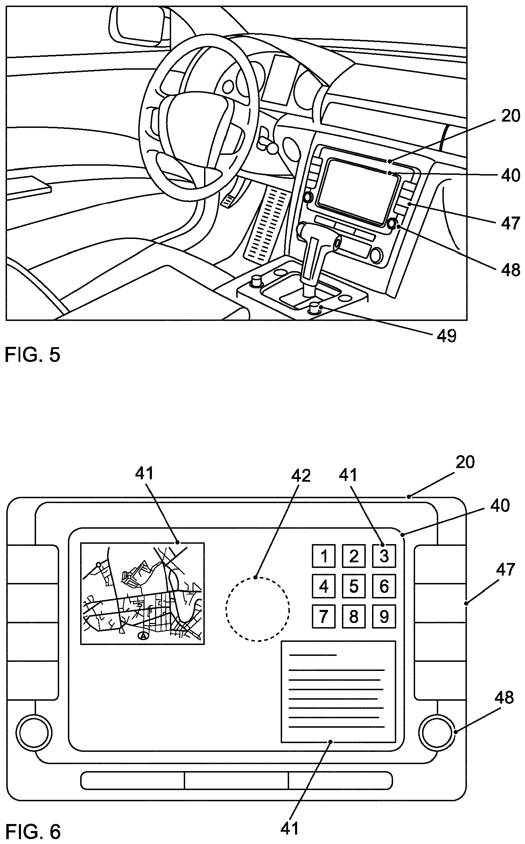

Fig. 5 zeigt schematisch einen Fahrzeuginnenraum mit einer Bedienvorrichtung 20 mit einem Touchscreen als berührungsempfindliche Eingabefläche 40. In diesem Beispiel ist die Bedienvorrichtung 20 in eine Armaturentafel des Fahrzeugs integriert. Sie kann selbstverständlich auch an einer anderen Position verbaut sein, beispielsweise in der Mittelkonsole oder freistehend aufgesetzt auf der Armaturentafel. Die Bedienvorrichtung 20 weist seitlich neben dem Touchscreen sowie unterhalb des Touchscreens eine Reihe von zusätzlichen Bedientasten 47 auf, beispielsweise zur schnellen Auswahl von bestimmten Funktionsbereichen. Zudem sind zwei Drehregler 48 vorhanden, wie sie üblicherweise zur Lautstärkeregelung und zum Scrollen innerhalb von Listen verwendet werden. Die Drehregler 48 können zusätzlich als Bedientaste ausgestaltet sein. In der Mittelkonsole befinden sich weitere Bedienelemente der Bedienvorrichtung 20, in diesem Beispiel zwei Dreh-Drück-Steller 49.

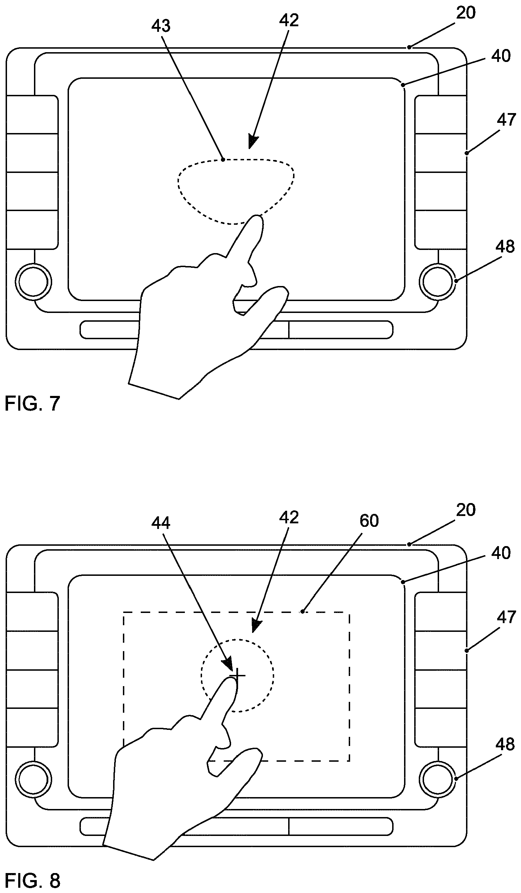

Fig. 6 zeigt eine Bedienvorrichtung 20 mit einem Touchscreen als berührungsempfindliche Eingabefläche 40, auf dem um eine Stützfläche 42 herum grafische Elemente 41 angezeigt werden, d.h. Schaltflächen und dekorative oder informative Inhalte. Im Beispiel handelt es sich bei den grafischen Elementen 41 um eine Navigationskarte, ein Zahlenfeld und ein Nachrichtenfenster. Die gestrichelt dargestellte Stützfläche 42 ist etwas außerhalb der Mitte des Touchscreens angeordnet. Die Lage sowie gegebenenfalls die Form und Größe der Stützfläche können vom Nutzer festgelegt werden, wie es weiter unten in Zusammenhang mit den Figuren 7 bis 9 erläutert wird. Ebenso kann mehr als eine Stützfläche 42 vorgesehen sein. Der Nutzer kann seine Finger im Bereich der Stützfläche 42 abstützen, ohne Funktionen auszulösen. Im Beispiel befinden sich deshalb innerhalb der Stützfläche keine grafischen Elemente 41. Es ist aber ebenso möglich, innerhalb der Stützfläche 42 ausschließlich dekorative oder informative Elemente 41 anzuzeigen, die nicht mit Funktionen verknüpft und deshalb auch nicht vom Nutzer anwählbar sind. Eine weitere Möglichkeit besteht darin, dass innerhalb der Stützfläche 42 angeordnete Elemente 41 zwar vom Nutzer anwählbar sind, dafür aber eine unmissverständliche Aktion erforderlich ist. Beispielsweise können Elemente 41 außerhalb der Stützfläche 42 durch einen einfachen Fingerdruck ausgewählt und aktiviert werden, während für Elemente 41 innerhalb der Stützfläche 42 ein mehrfacher Fingerdruck oder ein Einkreisen des gewünschten Elements 41 erforderlich ist. Sofern die Bedienvorrichtung 20 mehr als eine Bedienebene aufweist, beispielsweise eine erste Bedienebene für die Musikwiedergabe, eine zweite Bedienebene für die Klimaeinstellungen, usw., kann die Stützfläche 42 wahlweise für alle oder nur einige Bedienebenen gelten. Ebenso können individuelle Stützflächen 42 für die verschiedenen Bedienebenen oder für Gruppen von Bedienebenen vorgesehen sein. Dies umfasst auch die Möglichkeit, dass es für einzelne Bedienebenen keine Stützfläche gibt.

Fig. 7 zeigt eine erste Möglichkeit zum Bestimmen einer Stützfläche 42 durch den Nutzer. Nach dem Aktivieren eines Einrichtungsmodus der Bedienvorrichtung 20, beispielsweise durch einen Tastendruck, markiert der Nutzer mit dem Finger oder mit einer Eingabehilfe eine Kontur 43 der Stützfläche 42 auf dem Touchscreen. Dabei kann vorgesehen sein, dass der Nutzer die Konturen 43 von mehr als einer Stützfläche 42 markieren kann. Die Form der Stützfläche kann wahlweise frei wählbar oder auf definierte Formen beschränkt sein, beispielsweise Kreise oder Rechtecke. Im Falle von definierten Formen wird die vom Nutzer markierte Kontur 43 vorzugsweise durch eine näherungsweise passende Kontur entsprechend den zugelassenen Formen ersetzt. Im Beispiel steht der gesamte Touchscreen für das Einrichten einer Stützfläche 42 zur Verfügung. Es ist aber ebenso möglich, dass nur in einigen Bereichen des Touchscreens eine Stützfläche 42 eingerichtet werden kann. In diesem Fall ist es sinnvoll, dem Nutzer die zulässigen Bereiche anzuzeigen, beispielsweise durch eine farbliche Markierung oder eine Hervorhebung der entsprechenden Umrisse. Nachdem der Nutzer seine Angaben zur Stützfläche 42 gemacht hat, wird die entsprechende Stützfläche 42 festgelegt. Dabei kann dem Nutzer die festgelegte Stützfläche 42 noch einmal angezeigt werden. Schließlich wird der Einrichtungsmodus der Bedienvorrichtung 20 beendet. Dies erfordert vorzugsweise eine Bestätigung durch den Nutzer, beispielsweise durch einen weiteren Tastendruck.

Fig. 8 zeigt eine zweite Möglichkeit zum Bestimmen einer Stützfläche 42 durch den Nutzer. Nach dem Aktivieren des Einrichtungsmodus der Bedienvorrichtung 20 markiert der Nutzer mit dem Finger oder mit einer Eingabehilfe einen Mittelpunkt 44 der Stützfläche 42 auf dem Touchscreen. Ausgehend von diesem Mittelpunkt 44 wird dann die Stützfläche 42 ermittelt. Dazu kann beispielsweise eine Fläche mit einer bestimmten Form und Größe um den Mittelpunkt 44 gelegt werden, z.B. eine Kreisfläche mit einem festgelegten Durchmesser. Alternativ können dem Nutzer verschiedene Formen oder Größen der Stützfläche 42 vorgeschlagen werden, unter denen der Nutzer eine auswählt. Ebenso können dem Nutzer Schaltflächen zum Wechseln der Form oder zum Verkleinern oder Vergrößern der Fläche zur Verfügung gestellt werden. Wie zuvor kann vorgesehen sein, dass der Nutzer mehr als eine Stützfläche 42 einrichten kann. Im Beispiel steht nur ein gewisser Einrichtungsbereich 60 des Touchscreens für die Einrichtung der Stützfläche 42 zur Verfügung. Dieser wird dem Nutzer durch eine hervorgehobene Kontur angezeigt. Es ist aber ebenso möglich, dass die Einrichtung der Stützfläche 42 uneingeschränkt in der gesamten Anzeigefläche des Touchscreens zulässig ist. Nachdem der Nutzer seine Angaben zur Stützfläche 42 gemacht hat, wird die entsprechende Stützfläche 42 festgelegt und der Einrichtungsmodus der Bedienvorrichtung 20 beendet, gegebenenfalls nach einer Bestätigung durch den Nutzer.

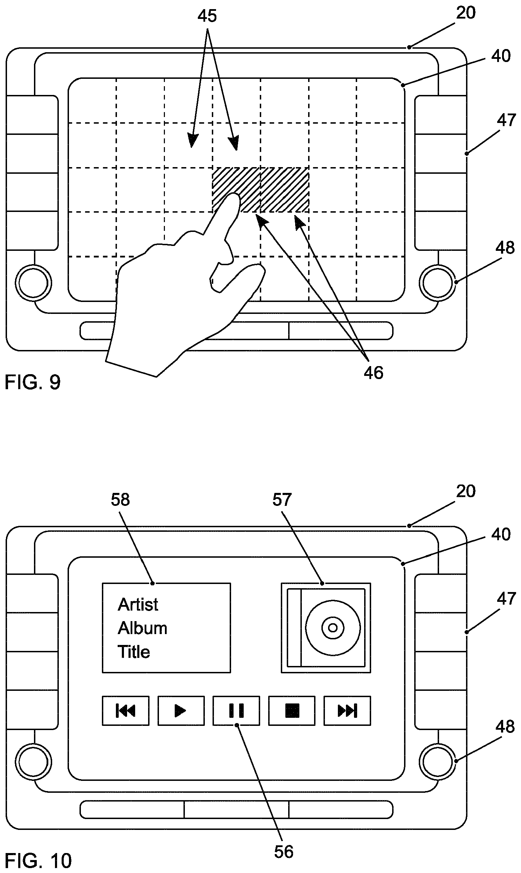

Fig. 9 zeigt eine dritte Möglichkeit zum Bestimmen einer Stützfläche 42 durch den Nutzer. In diesem Beispiel ist der Anzeigebereich des Touchscreens von einem Linienraster überzogen, das den Anzeigebereich in vorgeschlagene Flächenelemente 45 aufteilt. Nach dem Aktivieren des Einrichtungsmodus der Bedienvorrichtung 20 markiert der Nutzer mit dem Finger oder mit einer Eingabehilfe diejenigen vorgeschlagenen Flächenelemente 45 auf dem Touchscreen, die die Stützfläche 42 bilden sollen. Dabei müssen nicht zwingend zusammenhängende Flächenelemente 45 gewählt werden. Im Falle von getrennten gewählten Flächenelementen 46 können wahlweise mehrere Stützflächen 42 eingerichtet werden oder eine einzelne Stützfläche 42, die alle gewählten Flächenelemente 46 umfasst. Diese umfasst dann auch weitere vorgeschlagene Flächenelemente 45, die vom Nutzer nicht gewählt wurden. Im Beispiel ist der gesamte Anzeigebereich in vorgeschlagene Flächenelemente 45 aufgeteilt. Die vorgeschlagenen Flächenelemente 45 können aber auch auf Teilbereiche des Anzeigebereichs eingeschränkt sein. Nachdem der Nutzer seine Angaben zur Stützfläche 42 gemacht hat, wird die entsprechende Stützfläche 42 festgelegt und der Einrichtungsmodus der Bedienvorrichtung 20 beendet, gegebenenfalls nach einer Bestätigung durch den Nutzer.

Unabhängig davon, auf welche Weise die Stützfläche 42 ermittelt wurde, kann im Anschluss eine Anordnung der Elemente 41 auf der berührungsempfindlichen Eingabefläche 40 bestimmt werden. Dazu werden die Elemente 41 beispielsweise so positioniert, dass innerhalb der Stützfläche 42 keine Elemente 41 oder nur dekorative oder informative Elemente 41 angeordnet sind, die nicht mit Funktionen verknüpft sind. Alternativ kann die Anordnung der Elemente 41 unverändert beibehalten werden, etwaigen Elementen 41 innerhalb der Stützfläche 42 aber eine geänderte Bedienung zugewiesen werden, beispielsweise eine Aktivierung durch einen mehrfachen Fingerdruck. Gegebenenfalls kann dem Nutzer die Möglichkeit eingeräumt werden, die Anordnung der Elemente 41 zu beeinflussen oder vollständig selbst festzulegen.

In den Beispielen in den Figuren 7 bis 9 erfolgt die Einrichtung der Bedienvorrichtung 20 unmittelbar mittels der berührungsempfindlichen Eingabefläche 40 der Bedienvorrichtung 20. Alternativ kann die Stützfläche 42 auch über ein externes Gerät eingerichtet werden. Die erforderlichen Angaben zur Stützfläche 42 können dann drahtlos oder drahtgebunden an die Bedienvorrichtung 20 übermittelt werden. Beispielsweise kann der Nutzer die Stützfläche 42 mit Hilfe einer Anwendung auf seinem Computer oder Tablet festlegen. Auch hier kann der Nutzer die Möglichkeit bekommen, die Anordnung der Elemente 41 mitzugestalten.

Fig. 10 zeigt eine Anordnung von Elementen 56, 57, 58 auf dem Touchscreen, bevor eine Stützfläche festgelegt wurde. Im Beispiel sind die Elemente 56, 57, 58 Bestandteile eines Menüs für die Medienwiedergabe. Neben einer Reihe von Bedienelementen 56 für die Kontrolle der Wiedergabe eines Musiktitels wird ein Grafikelement 57 angezeigt, beispielsweise mit einem Albumcover des aktuell wiedergegebenen Musiktitels. Weiterhin ist ein Textelement 58 vorgesehen, in dem beispielsweise Informationen zum Künstler, zum Album und zum Namen des aktuell wiedergegebenen Musiktitels angezeigt werden. Im Beispiel ist das Textelement 58 ein anwählbares Element. Durch Berühren des Textelements 58 kann der Nutzer z.B. zusätzliche Informationen abrufen oder einen anderen Musiktitel wählen. Das Grafikelement 57 ist hier rein dekorativ und nicht anwählbar.

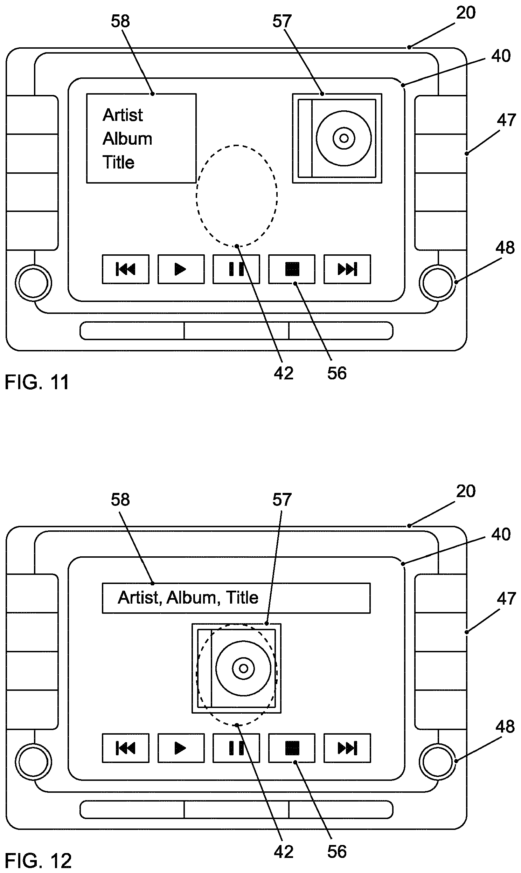

Fig. 11 zeigt eine erste Möglichkeit einer geänderten Anordnung der Elemente 56, 57, 58 nach dem Festlegen einer Stützfläche 42. Da die Stützfläche 42 bei der ursprünglichen Anordnung der Elemente 56, 57, 58 sowohl mit den Bedienelementen 56 als auch mit dem Textelement 58 kollidiert, wurden die Bedienelemente 56 nach unten verschoben. Das Textelement 58 wurde nach oben verschoben und zudem verkleinert. Um dennoch eine stimmige Anordnung der Elemente 56, 57, 58 zu erzielen, wurde auch das Grafikelement 57 nach oben verschoben. Innerhalb der Stützfläche 42 befinden sich im Ergebnis keine Elemente 56, 57, 58 mehr.

Fig. 12 zeigt eine zweite Möglichkeit einer geänderten Anordnung der Elemente 56, 57, 58 nach dem Festlegen der Stützfläche 42. Wie schon in Fig. 11 wurden die Bedienelemente 56 nach unten verschoben. Das Textelement 58 wurde nicht verschoben, allerdings wurde seine Form verändert und die Anordnung des Inhalts angepasst. Aufgrund der geänderten Form des Textelements 58 wurde das Grafikelement 57 in die Mitte des Touchscreens verschoben. Innerhalb der Stützfläche 42 befindet sich im Ergebnis lediglich das nicht anwählbare Grafikelement 57.

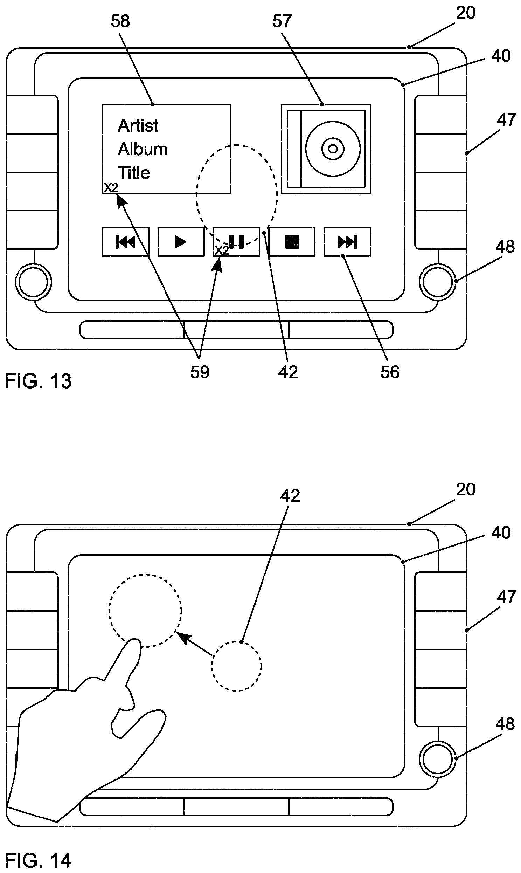

Fig. 13 zeigt eine dritte Möglichkeit einer geänderten Anordnung der Elemente 56, 57, 58 nach dem Festlegen der Stützfläche 42. Die Positionierung und Form der verschiedenen Elemente 56, 57, 58 wurde dabei unverändert beibehalten. Allerdings können diejenigen anwählbaren Elemente 56, 58, die ganz oder teilweise innerhalb der Stützfläche 42 liegen, nun nur noch durch eine unmissverständliche Aktion ausgewählt werden, beispielsweise durch einen mehrfachen Fingerdruck. In Fig. 13 wird dem Nutzer dies durch ein Hinweissymbol 59 an den betroffenen Elementen 56, 58 verdeutlicht.

Fig. 14 zeigt das Bestimmen einer Stützfläche 42 durch Verschieben oder Skalieren einer existierenden oder vorgeschlagenen Stützfläche 42. Nach dem Aktivieren des Einrichtungsmodus der Bedienvorrichtung 20 wird dem Nutzer auf dem Touchscreen eine bereits existierende Stützfläche 42 angezeigt oder eine Stützfläche 42 vorgeschlagen. Der Nutzer kann diese Stützfläche 42 mit dem Finger auswählen und auf dem Touchscreen verschieben. Durch geeignete Fingerbewegungen kann er die Stützfläche 42 zudem skalieren, beispielsweise durch einen 2-Finger-Zoom. Nachdem der Nutzer seine Angaben zur Stützfläche 42 gemacht hat, wird die entsprechende Stützfläche 42 festgelegt und der Einrichtungsmodus der Bedienvorrichtung 20 beendet, gegebenenfalls nach einer Bestätigung durch den Nutzer.

### Bezugszeichenliste

- 10: Aktivieren eines Einrichtungsmodus
- 11: Ermitteln von Angaben zu einer Stützfläche
- 12: Festlegen der Stützfläche
- 13: Beenden des Einrichtungsmodus
- 20: Bedienvorrichtung
- 21: Eingang
- 22: Steuerungseinheit
- 23: Ausführungseinheit
- 24: Kontrolleinheit
- 25: Speicher
- 26: Ausgang
- 30: Bedienvorrichtung
- 31: Speicher
- 32: Prozessor
- 33: Eingang
- 34: Ausgang
- 40: Berührungsempfindliche Eingabefläche
- 41: Element
- 42: Stützfläche
- 43: Kontur
- 44: Mittelpunkt
- 45: Vorgeschlagenes Flächenelement
- 46: Ausgewähltes Flächenelement
- 47: Bedientasten
- 48: Drehregler
- 49: Dreh-Drück-Steller
- 50: Kraftfahrzeug
- 51: Infotainment-System
- 52: Datenübertragungseinheit
- 53: Fahrerassistenzsystem
- 54: Speicher
- 55: Netzwerk
- 56: Bedienelement
- 57: Grafikelement
- 58: Textelement
- 59: Hinweissymbol
- 60: Einrichtungsbereich

## Patentansprüche

1. Verfahren zum Einrichten einer in einem Kraftfahrzeug (50) verbauten Bedienvorrichtung (20) mit einer berührungsempfindlichen Eingabefläche (40), mit den Schritten:
- Aktivieren (10) eines Einrichtungsmodus der Bedienvorrichtung (20) durch den Nutzer;
- Ermitteln (11) von Angaben zu einer Stützfläche (42) der berührungsempfindlichen Eingabefläche (40), in der ein Nutzer seine Finger abstützen kann, ohne dadurch versehentlich Aktionen auszulösen, basierend auf einer der folgenden Eingaben durch den Nutzer:
Markieren einer Kontur (43) der Stützfläche (42) auf der berührungsempfindlichen Eingabefläche (40), Markieren zumindest eines Mittelpunktes (44) der Stützfläche (42) auf der berührungsempfindlichen Eingabefläche (40), Auswählen zumindest eines vorgeschlagenen Flächenelements (45) auf der berührungsempfindlichen Eingabefläche (40);
- Festlegen (12) der Stützfläche (42) der berührungsempfindlichen Eingabefläche (40) auf Grundlage der ermittelten Angaben; und
- Beenden (13) des Einrichtungsmodus der Bedienvorrichtung (20).

2. Verfahren gemäß Anspruch 1, wobei die Bedienvorrichtung (20) einen Touchscreen als berührungsempfindliche Eingabefläche (40) aufweist.

3. Verfahren gemäß Anspruch 1 oder 2, wobei dem Nutzer zulässige Bereiche angezeigt werden, in denen eine Stützfläche (42) eingerichtet werden kann.

4. Verfahren gemäß einem der vorherigen Ansprüche, wobei nach dem Festlegen (12) der Stützfläche (42) der berührungsempfindlichen Eingabefläche (40) eine Anordnung von Elementen (41) auf der berührungsempfindlichen Eingabefläche (40) bestimmt wird.

5. Verfahren gemäß einem der vorherigen Ansprüche, wobei ein innerhalb der Stützfläche (42) der berührungsempfindlichen Eingabefläche (40) angeordnetes Element (41) nicht anwählbar ist oder nur mittels einer unmissverständlichen Aktion anwählbar ist.

6. Verfahren gemäß einem der vorherigen Ansprüche, wobei die Stützfläche (42) der berührungsempfindlichen Eingabefläche (40) hervorgehoben dargestellt wird.

7. Verfahren gemäß einem der vorherigen Ansprüche, wobei unterschiedliche Stützflächen (42) für unterschiedliche Bedienebenen der Bedienvorrichtung (20) festgelegt werden.

8. Computerlesbares Speichermedium mit Instruktionen, die bei Ausführung durch einen Computer den Computer zur Ausführung der Schritte eines Verfahrens gemäß einem der Ansprüche 1 bis 7 zum Einrichten einer Bedienvorrichtung (20) veranlassen.

9. Bedienvorrichtung (20), welche in einem Kraftfahrzeug (50) verbaubar ist, mit:
- einer berührungsempfindlichen Eingabefläche (40); und
- einem Steuergerät (22) zum Steuern der Bedienvorrichtung (20);
wobei das Steuergerät (22) eingerichtet ist, die folgenden Schritte zum Einrichten der Bedienvorrichtung (20) auszuführen:
- Aktivieren (10) eines Einrichtungsmodus der Bedienvorrichtung (20);
- Ermitteln (11) von Angaben zu einer Stützfläche (42) der berührungsempfindlichen Eingabefläche (40), in der ein Nutzer seine Finger abstützen kann, ohne dadurch versehentlich Aktionen auszulösen, basierend auf einer der folgenden Eingaben: Markieren einer Kontur (43) der Stützfläche (42) auf der berührungsempfindlichen Eingabefläche (40), Markieren zumindest eines Mittelpunktes (44) der Stützfläche (42) auf der berührungsempfindlichen Eingabefläche (40), Auswählen zumindest eines vorgeschlagenen Flächenelements (45) auf der berührungsempfindlichen Eingabefläche (40);
- Festlegen (12) der Stützfläche (42) der berührungsempfindlichen Eingabefläche (40) auf Grundlage der ermittelten Angaben; und
- Beenden (13) des Einrichtungsmodus der Bedienvorrichtung (20).

10. Kraftfahrzeug (50), **dadurch gekennzeichnet, dass** es zumindest eine Bedienvorrichtung (20) gemäß Anspruch 9 aufweist oder eingerichtet ist, ein Verfahren gemäß einem der Ansprüche 1 bis 7 zum Einrichten einer Bedienvorrichtung (20) auszuführen.

## Claims

1. Method for setting up an operating device (20) which is installed in a motor vehicle (50) and has a touch-sensitive input surface (40), having the steps of:
- the user activating (10) a set-up mode of the operating device (20);
- determining (11) details of a supporting area (42) of the touch-sensitive input surface (40), in which a user can support his fingers without thereby inadvertently triggering actions, on the basis of one of the following inputs by the user:
marking a contour (43) of the supporting area (42) on the touch-sensitive input surface (40), marking at least a centre point (44) of the supporting area (42) on the touch-sensitive input surface (40), selecting at least one suggested surface element (45) on the touch-sensitive input surface (40);
- defining (12) the supporting area (42) of the touch-sensitive input surface (40) on the basis of the determined details; and
- ending (13) the set-up mode of the operating device (20) .

2. Method according to Claim 1, wherein the operating device (20) has a touchscreen as a touch-sensitive input surface (40).

3. Method according to Claim 1 or 2, wherein permissible regions in which a supporting area (42) can be set up are indicated to the user.

4. Method according to one of the preceding claims, wherein, after defining (12) the supporting area (42) of the touch-sensitive input surface (40), an arrangement of elements (41) on the touch-sensitive input surface (40) is determined.

5. Method according to one of the preceding claims, wherein an element (41) arranged within the supporting area (42) of the touch-sensitive input surface (40) cannot be selected or can be selected only by means of an unmistakable action.

6. Method according to one of the preceding claims, wherein the supporting area (42) of the touch-sensitive input surface (40) is highlighted.

7. Method according to one of the preceding claims, wherein different supporting areas (42) are defined for different operating levels of the operating device (20).

8. Computer-readable storage medium having instructions which, when executed by a computer, cause the computer to carry out the steps of a method according to one of Claims 1 to 7 for setting up an operating device (20) .

9. Operating device (20) which can be installed in a motor vehicle (50), having:
- a touch-sensitive input surface (40); and
- a control device (22) for controlling the operating device (20);
wherein the control device (22) is configured to carry out the following steps for setting up the operating device (20):
- activating (10) a set-up mode of the operating device (20);
- determining (11) details of a supporting area (42) of the touch-sensitive input surface (40), in which a user can support his fingers without thereby inadvertently triggering actions, on the basis of one of the following inputs: marking a contour (43) of the supporting area (42) on the touch-sensitive input surface (40), marking at least a centre point (44) of the supporting area (42) on the touch-sensitive input surface (40), selecting at least one suggested surface element (45) on the touch-sensitive input surface (40);
- defining (12) the supporting area (42) of the touch-sensitive input surface (40) on the basis of the determined details; and
- ending (13) the set-up mode of the operating device (20) .

10. Motor vehicle (50), **characterized in that** it has at least one operating device (20) according to Claim 9 or is configured to carry out a method according to one of Claims 1 to 7 for setting up an operating device (20).

## Revendications

1. Procédé permettant de configurer un dispositif de commande (20) installé dans un véhicule automobile (50) et pourvu d'une surface d'entrée tactile (40), comprenant les étapes consistant à :
- activer (10) un mode de configuration du dispositif de commande (20) par l'utilisateur ;
- établir (11) des indications concernant une surface d'appui (42) de la surface d'entrée tactile (40) sur laquelle un utilisateur peut poser ses doigts sans pour autant déclencher des actions par inadvertance, sur la base d'une des entrées suivantes par l'utilisateur : marquer un contour (43) de la surface d'appui (42) sur la surface d'entrée tactile (40), marquer au moins un centre (44) de la surface d'appui (42) sur la surface d'entrée tactile (40), sélectionner au moins un élément de surface proposé (45) sur la surface d'entrée tactile (40) ;
- définir (12) la surface d'appui (42) de la surface d'entrée tactile (40) sur la base des indications établies ; et
- terminer (13) le mode de configuration du dispositif de commande (20).

2. Procédé selon la revendication 1, dans lequel le dispositif de commande (20) présente un écran tactile comme surface d'entrée tactile (40).

3. Procédé selon la revendication 1 ou 2, dans lequel des zones admissibles dans lesquelles une surface d'appui (42) peut être configurée sont affichées pour l'utilisateur.

4. Procédé selon l'une quelconque des revendications précédentes, dans lequel, après la définition (12) de la surface d'appui (42) de la surface d'entrée tactile (40), une disposition des éléments (41) sur la surface d'entrée tactile (40) est déterminée.

5. Procédé selon l'une quelconque des revendications précédentes, dans lequel un élément (41) disposé à l'intérieur de la surface d'appui (42) de la surface d'entrée tactile (40) ne peut pas être sélectionné ou ne peut être sélectionné qu'au moyen d'une action explicite.

6. Procédé selon l'une quelconque des revendications précédentes, dans lequel la surface d'appui (42) de la surface d'entrée tactile (40) est mise en évidence.

7. Procédé selon l'une quelconque des revendications précédentes, dans lequel différentes surfaces d'appui (42) sont définies pour différents niveaux de commande du dispositif de commande (20).

8. Support de stockage lisible par ordinateur, comprenant des instructions qui, lorsqu'elles sont exécutées par un ordinateur, font que l'ordinateur exécute les étapes d'un procédé selon l'une quelconque des revendications 1 à 7 pour configurer un dispositif de commande (20).

9. Dispositif de commande (20) qui peut être installé dans un véhicule automobile (50), comprenant :
- une surface d'entrée tactile (40) ; et
- un appareil de commande (22) pour commander le dispositif de commande (20) ;
dans lequel l'appareil de commande (22) est conçu pour exécuter les étapes suivantes pour configurer le dispositif de commande (20) :
- activer (10) un mode de configuration du dispositif de commande (20) ;
- établir (11) des indications concernant une surface d'appui (42) de la surface d'entrée tactile (40) sur laquelle un utilisateur peut poser ses doigts sans pour autant déclencher des actions par inadvertance, sur la base d'une des entrées suivantes : marquer un contour (43) de la surface d'appui (42) sur la surface d'entrée tactile (40), marquer au moins un centre (44) de la surface d'appui (42) sur la surface d'entrée tactile (40), sélectionner au moins un élément de surface proposé (45) sur la surface d'entrée tactile (40) ;
- définir (12) la surface d'appui (42) de la surface d'entrée tactile (40) sur la base des indications établies ; et
- terminer (13) le mode de configuration du dispositif de commande (20).

10. Véhicule automobile (50), **caractérisé en ce qu'**il présente au moins un dispositif de commande (20) selon la revendication 9 ou est configuré pour exécuter un procédé selon l'une quelconque des revendications 1 à 7 pour configurer un dispositif de commande (20).
